# EUROPEAN PATENT APPLICATION

(11) **EP 4 531 370 A1**
(43) Date of publication of application: **02.04.2025**
(21) Application number: 23200583.5
(22) Date of filing: 28.09.2023
(51) Int. Cl.: H04L 47/22, H04L 47/62, H04L 47/625, H04L 67/62, H04L 67/63

(54) **METHOD AND NETWORKING NODE FOR INFORMATION CENTRIC DATA NETWORKING, FORWARDING DECISION PROGRAM, DATA CARRIER, AND VEHICLE COMPRISING A NETWORKING NODE**

(71) Applicant: Airbus S.A.S., 31700 Blagnac (FR)
(72) Inventor: Milheiro Mendes, Paulo-Jorge, Taufkirchen (DE)
(74) Representative: OTN Airbus SAS

(57) **Abstract**

A method for operating a networking node (1) for information centric data networking, the method comprising the step of queuing a number of request packets and data packets received at the networking node (1) in a request queue (21) and in a data queue (22), respectively; wherein outbound request packets and data packets are being prioritised over each other by a forward decision module (30) of the networking node (1) based on a length of the request queue (21) and/or the data queue (22), a forwarding decision program (2) for configuring a forwarding decision module (30) of a forwarding engine (11) of a networking node (1) in an information centric data networking infrastructure (9), comprising instructions which, when the program is executed by the networking node (1), cause the networking node (1) to carry out the method, a computer-readable data carrier (3, 3a, 3b) having stored thereon the forwarding decision program (2), a networking node (1) for information centric data networking, the networking node (1) comprising a computer readable data carrier (3, 3a, 3b) and/or a forwarding engine (11) configured to carry out the method, and a vehicle (6), in particular an aircraft, comprising at least one networking node are described.

## Description

### Technical Field

The present description relates to the field of ensuring Quality of Service (QoS) in communications within information-centric networking (ICN) based infrastructure. In particular, the disclosure relates to a method for operating a networking node for information centric data networking, a forwarding decision program for configuring a forwarding decision module of a forwarding engine of a networking node in an information centric data networking infrastructure, computer-readable data carrier having stored thereon the forwarding decision program, a networking node for information centric data networking, and to a vehicle, in particular an aircraft, comprising at least one networking node.

### Technical Background

Information Centric Networking (ICN) infrastructures have been emerging since around the year 2006 and have been proposed as an alternative approach to communication via the Internet. The ICN paradigm can be seen as particularly suited for any applications with unstable or intermittent connectivity and therefore relies on data storage within the ICN infrastructure itself, e.g. in that an end-host caches certain information in order to be retrieved by a client through sending a respective ICN data interest message and then receiving a corresponding ICN data packet, thus avoiding the need for establishing a relatively stable data connection between a client and a host, such as it is commonly the case in TCP/IP communications.

Providing of QoS in a communication network depends upon the type of data to be transported, which is a characteristic not supported natively in IP host-centric networks. On the other end, the IP host-centric approach is not adapted to the current needs of Internet users, who access the Internet to access or provide data and not to connect to a specific host. In this context, some other alternative networking paradigms aim to get closer to the user needs, by focusing on the process of data exchange and not so much on the communication between hosts. An example for an alternative networking paradigm is the publish/subscribe paradigm used for instance to deploy Internet of Things (IoT) systems, and which is being leveraged to provide data centric networking properties to Internet services that aim to deliver content.

In data centric networking frameworks, data consumer end-points send requests towards data producers, being data provided by the latter or by any other devices in the path towards the producers that have cached before the required data objects. According to this paradigm, a request containing the name of the required data object, is used to fetch a packet, or a set of packets, containing the required data. Data packets traverse the inverse path followed before by the request packets that triggered them. This means that the sum of all request packets that traverse a networking node in one direction is equal to the sum of all data packets that traverse that same node in the reverse direction. The need for efficient QoS provisioning for data exchange in data centric networks is essential in scenarios in which devices may be resource constraints and communication links may have oscillating capacity, as happens in aeronautic and space networks, for aircrafts, spacecrafts, satellites, or alike.

EP 2 985 926 B1 describes a wireless aircraft network comprising a plurality of aircraft having transceiver devices for transceiving wireless communication, a plurality of ground-based network stations having transceiver devices for transceiving wireless communication, and a network operator station configured to store location data regarding the current geographical location of the plurality of aircraft in a location data table of the network operator station and to determine a most efficient network path for each of the plurality of aircraft to one of a plurality of ground-based network stations depending on the current geographical location of the plurality of aircraft and the geographical location of the plurality of ground-based network stations.

EP 2 145 426 B1 relates to a system enabling communication between an aircraft-based computer network and a ground-based computer network, characterised in that the system includes means for establishing a network communication between a ground-based computer network and an aircraft-based computer network via at least one communication medium using a synchronous communication mode.

In such scenarios, proper QoS management remains one of the key challenges. Effective QoS provisioning is highly dependent on identifying content to fulfil expected service requirements, which is a complex task for today's host-centric IP networks as content identification is not a native feature. This means that, on the one hand, a direct application of QoS mechanism typically used for host-communication in a data centric networking framework leads to a poor QoS provisioning. On the other hand, publish/subscribe approaches like data centric networking natively offer content identification in the network. However, QoS concerns are not sufficiently addressed in this publish/subscribe approach
As mentioned before, data centric network paradigms, such as ICN offer native content identification that can be effective when implementing QoS provisioning. However, there is no common naming scheme for the implementation of content identification. Approaches vary from hierarchical content naming within Named Data Networking [NDN], to the use of a block-based content identification structure in the proposal of the COMET project, and the use of an information management plane developed within the PURSUIT project, such as described by J. Wang, R. Wakikawa, L. Zhang, "DMND: collecting data from mobiles using named data", Vehicular Networking Conference, Jersey City, NJ, USA, 2010.

Moreover, QoS assurance in data centric networking approaches also vary in approach and focus, from the use of QoS naming prefixes built on PURSUIT to the use of optimised caching policies where data popularity is considered when making decisions on content placement as described by W. Chu, L. Wang, H. Xie, Z.-L. Zhang, Z. Jiang, "Network delay guarantee for differentiated services in content-centric networking" Comput. Commun., 76 (2016), pp. 54-66.

In some scenarios, particular metrics are of interest, such as the awareness about energy efficiency within the network as mentioned by 3] X. Wang, J. Lv, M. Huang, K. Li, J. Li, K. Ren, "Energy-efficient icn routing mechanism with qos support" Comput. Netw., 131 (2018), pp. 38-51.

Several other approaches aim to explore both the need for effective naming and specifics about the nature of the traffic, such as C. Tsilopoulos, G. Xylomenos, "Supporting diverse traffic types in information centric networks", In Proc. of. ACM SIGCOMM Workshop on Information-Centric Networking, ACM, Athens, Greece, 2011, or to focus on developing a QoS mechanism to specific scenarios such as vehicular networks, such as M. Amadeo, C. Campolo, A. Molinaro, "Priority-based content delivery in the Internet of vehicles through} named data networking" J. Sens. Actuator Netw., 5 (4) (2016), pp. 2-17.

Some of these approaches result in high overhead and rely on specific data name techniques which cannot adapt to general applications. Moreover, none of the above approaches leverage the fact that content can be retrieved not only from the producer, but also from the routers that cache it. In this context, some approaches aim to leverage prefix-matching to measure the popularity of content and use this for decisions about the data to be cached, such as S. Korla, S. Chilukuri, "T-move: a light-weight protocol for improved QoS in content-centric networks with producer mobility", Future Internet, 11 (2) (2019).

Furthermore, in this context, effective cache servers placement to provide QoS is a challenge, namely to decide where to store content, since it may not be able to be in all networking devices, as addressed by J. Augé, G. Carofiglio, G. Grassi, L. Muscariello, G. Pau, X. Zeng, "Map-me: managing anchor-less producer mobility in content-centric networks" IEEE Trans. Netw. Serv. Manag., 15 (2) (2018), pp. 596-610.

Some other approaches suggest caching in edge routers in order to avoid redundancy and improve the performance of constraint nodes. Despite all these advantages, in more dynamic environments with constrained resources such an approach can burdensome the servers and increase the infrastructure deployment cost, as described by J. Badshah, M. Mohaia Alhaisoni, N. Shah, M. Kamran, "Cache servers placement based on important switches for sdn-based ICN", Electronics 9 (1).

While most of the mentioned prior-art aims to tackle the QoS issue from a content management point of view, several other aspects of a data-centric networking framework may have an impact on the overall QoS, such as the forwarding strategies. Several forwarding strategies have been proposed to leverage packet delivery in data centric networks. However, less attention has been given to forwarding strategies potential to improve QoS. It is understood that handling distinct forwarding strategies, each one tailored to different types of traffic categories is important to achieve a good QoS level in data centric networks, as described by Ivanes Araujo, Andrey Silva, Aldebaro Klautau, Neiva Linder, "QoS in Forwarding Strategies for ICN: New Algorithm and Experimental Evaluation", Journal of Communication and Information Systems, January 2019.

Thus, methods and systems for operating networking nodes in ICN according to the prior art cannot fully satisfy QoS needs in ICN communications in terms of reliability and availability on the one hand, as well as performance and comfort on the other hand.

### Summary

It may thus be seen as an object to provide suitable QoS for ICN communications. In other words, an object may be seen in providing ICN systems, in particular for vehicles, such as aircrafts, which satisfy certain needs in terms of QoS. Given that distinct forwarding strategies may be simultaneously applied, there is the need to provide a framework that will coordinate their interoperability. These and other objects are solved by the subject matter of the independent claims.

A method for operating a networking node for information centric data networking is provided, the method comprising the steps of queuing a number of request packets and data packets received at the networking node in a request queue and in a data queue, respectively; wherein outbound request packets and data packets are being prioritised over each other by a forward decision module of the networking node based on a length of the request queue and/or the data queue.

A forwarding decision program for configuring a forwarding decision module of a forwarding engine of a networking node in an information centric data networking infrastructure is provided, comprising instructions which, when the program is executed by the networking node, cause the networking node to carry out a corresponding method.

A computer-readable data carrier having stored thereon a corresponding forwarding decision program is provided. A computer-readable data carrier may include and/or be comprised of a computer-readable medium and/or a data carrier signal carrying the forwarding decision program and/or comprising respective instructions which, when the program is executed by the forwarding engine, cause the forwarding engine to carry out a method for operating a network node.

A networking node for information centric data networking is provided, the network node comprising a corresponding computer readable data carrier and/or a forwarding engine configured to carry out a corresponding method.

A vehicle is provided, in particular an aircraft, comprising at least one corresponding networking node.

The solution has the advantage over the prior art that the forward decision module decides when to send out the request packets and data packets networking node. This enables prioritisation of certain data traffic, which is required for different applications and content types. The prioritisation helps to meet respective QoS needs.

Thus, previously known data centric networking paradigms are extended in order to ensure the level of QoS required by each type of data with data delivery deadline awareness and shaping the forwarding decisions to ensure prioritised packet treatment. The proposed mechanism enables to classify the priority of data requests, with associated QoS requirements, by encoding QoS information into request packets, while being able to make proper decisions about forwarding requests taking into account the resources needed to forward the requested data back to the requester as well as store it to feed follow up identical requests.

While most of the prior-art is looking at different caching and forwarding strategies to improve QoS in data centric networks, no approach is looking at the best way to integrate all the available resources in a data centric networked node, including not only the cache and forwarding strategies but also the resources available in the outgoing interfaces, which are correlated with the capacity of links, such as provided by a hop-by-hop QoS control in data centric network as enabled by the proposed solution.

Further developments can be derived from the dependent claims and from the following description. The described embodiments provide a new QoS-aware operation for data centric networking nodes, which is based on three combined functionalities: rate control of request packets to ensure agreed throughput levels; traffic prioritisation; caching control in order to reduce the overall end-to-end latency.

Controlling the rate of request packets in one direction is useful to regulate the traffic of data packets in the reverse direction. The control of request packets is done to ensure that the correspondent data packets will have enough resources (link and cache) available in the networking node to fulfil the QoS requirement requested by the data consumer. By shaping the rate of request packets, the rate of incoming data packets is indirectly shaped to maximise the use of available bandwidth while minimising loss of data packets.

Besides the mentioned traffic shaping mechanism, the proposed embodiments also ensure that different QoS levels for distinct data types, in a way that some data types (e.g., video streaming) must be treated with more priority in networked nodes than regular download data. Hence this invention encompasses a set of schedulers and queues in order to ensure that high-priority data is forwarded faster than low-priority data. Moreover, requests for traffic with high priority may take advantage of local existing multi-path forwarding strategies in order to increase the probability of finding the required data in a short period of time

Moreover, the proposed embodiments also control the local caching process, giving priority to data objects whose data origin (producer of other caching nodes) is further away from the current node, and to data objects that have lower time to live.

According to an aspect, sending out request packets is being prioritised over sending out data packets when the length of the request queue and/or the data queue is below a congestion warning alert level. Prioritising request packets over data packets can be implemented as a default setting. Thereby, end-to-end delays and the possibility of dropping packets due to exceeding timeouts can be reduced.

According to an aspect, sending out data packets is being prioritised over sending out request packets when the length of the data queue is about to reach a congested state. Thus, the data packet queue is being reduced. Corresponding requests are being served. Consequently, end-to-end delays and the possibility of dropping packets due to exceeding timeouts can be further reduced.

According to an aspect, the method further comprises the step of listing incoming request packets in a packet receipt schedule managed at the networking node together with an identifier for an incoming network interface of the request packet. The listing of the incoming packets in the packet receipt schedule provides awareness of an amount of data packets to be expected corresponding the amount of listed request packets, and thus enables to prepare for future data traffic at the incoming network interface. Corresponding queues can thus be managed in advance of the expected data traffic.

According to an aspect, the method further comprises the steps of caching data packets in a local storage module of the networking node; looking up the packet receipt schedule for finding at least one data packet stored in the local storage module and corresponding to at least one of the request packets listed in the packet receipt schedule; and sending the at least one data packet to the incoming network interface associated with the respective identifier listed in the packet receipt schedule if the corresponding data packet is stored in the local storage module. The corresponding request packet can be discarded. Thus, by caching data packets in a local storage module and providing them from there helps to reduce the overall data traffic and prevent congestion of any data queues. The respective requests are efficiently and swiftly served, thereby minimising data transmission delays.

According to an aspect, the method further comprises the step of sending the at least one request packet listed in the packet receipt schedule to another incoming network interface which is not associated with the respective identifier listed in the packet receipt schedule if the corresponding data packet is not stored in the local storage module. Different network interfaces can thus support each other in providing data packets. This helps to again in minimising data transmission delays and serve respective request in an expedient way.

According to an aspect, the method further comprises the steps of listing the sent request packet together with an associated packet identifier in a timetable; and removing the entry regarding at least one of the request packets listed in the timetable after a timeout. A local timer can be started in the timetable upon creating an entry for timing the time span until the timeout is reached. Packets to be sent can be passed over to the forward decision module. By removing the entry regarding at least one of the request packets listed in the timetable after the timeout, corresponding resources relating to the timetable and/or to the request packet can be saved and/or limited.

According to an aspect, the method further comprises the steps of checking the timetable for at least one of the request packets sent upon receipt of a corresponding data packet; calculating an end-to-end delay based on a respective time value set upon queuing the at least one request packet in the request queue in order forwarded to a respective data source of the requested data packet prioritising a data object from the corresponding data packet to be stored in the networking node if local storage resources of the networking node are above a pre-defined storage threshold, and when a time to retrieve the corresponding data packet from a respective data source exceeds the calculated end-to-end delay, and/or when the corresponding data object has a lower time-to-live than the calculated end-to-end delay. Thus, by caching data packets in a local storage module and providing them from there again helps to reduce the overall data traffic and prevent congestion of any data queues. The respective requests are efficiently and swiftly served, thereby minimising data transmission delays.

The time-to-live value can be a field of the packet and can be filled up by a producer of a corresponding data packet. When a producer generates a certain data packet, it will indicate what the time-to-live and/or validity of that data are or is, respectively, and it will include the corresponding value in the data packet. A time-to-live may have a format like a regular time and date (e.g., following the ISO 8601 standard, an example time-to-live value may be: 20240904T090718Z). The time value can relate to the point of time of passing over the request packet to the forwarding module. If sufficient memory space in the local storage module is available, the data packet can be cached anyway.

According to an aspect, the method further comprises the steps of listing data packets forwarded by the networking node in a forwarding table managed at the networking node; receiving a Nack packet at the networking node; and removing an entry corresponding to at least one of the data packets from the forwarding table. Nack packets can be used to indicate that a received data packet was incomplete, faulty, or damaged, or alike, or has not been received in the first place. The data packet can thus be sent again, and/or if it has already been received at the networking node in a faulty or damaged state, the data packet can again be requested at its source. This helps to further reduce unnecessary network traffic and thereby free resources.

According to an aspect, the method further comprises the steps of queuing Nack-packets received at the networking node in a Nack queue; wherein outbound Nack packets, request packets and/or data packets are being prioritised over each other by the forward decision module based on a length of the request queue, the data queue and/or the Nack queue. Nack packets can be prioritised over data packets. Thereby, again, end-to-end delays and the possibility of dropping packets due to exceeding timeouts can be reduced.

According to an aspect, the method further comprises the step of adding the Nack packet to the Nack queue if the forwarding table does not contain an entry regarding the corresponding data packet. The Nack packet can be sent to the outbound interfaces stored in the packet receipt schedule and associated with the data object, i.e. data packet corresponding to a respective request packet mentioned in the Nack packet. This helps to further reduce unnecessary data traffic.

In comparison with other approaches according to the prior art that aim to augment data centric networks with QoS control, the proposed embodiments provide the benefits that they integrate all the available resources in a data centric networked node, including not only the cache and forwarding strategies but also the resources available in the outgoing interfaces. The embodiments combine the rate control of request packets with data prioritisation and caching control. They provide caching strategies based on data life time and distance toward data origin, thus complementing and/or contributing to prior art that looks at data popularity as a metric for caching control. The proposed embodiments provide an awareness of the properties of different forwarding strategies

### Brief Description of the Drawings

The subject matter will hereinafter be described in conjunction with the following drawing figures, wherein like numerals denote like elements, and wherein:
Fig. 1 is a schematic representation of a data transmission system involving a networking node implemented in a vehicle.
Fig. 2 is schematic representation of the networking node as a part of the data transmission system.

### Detailed Description of the Drawings

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

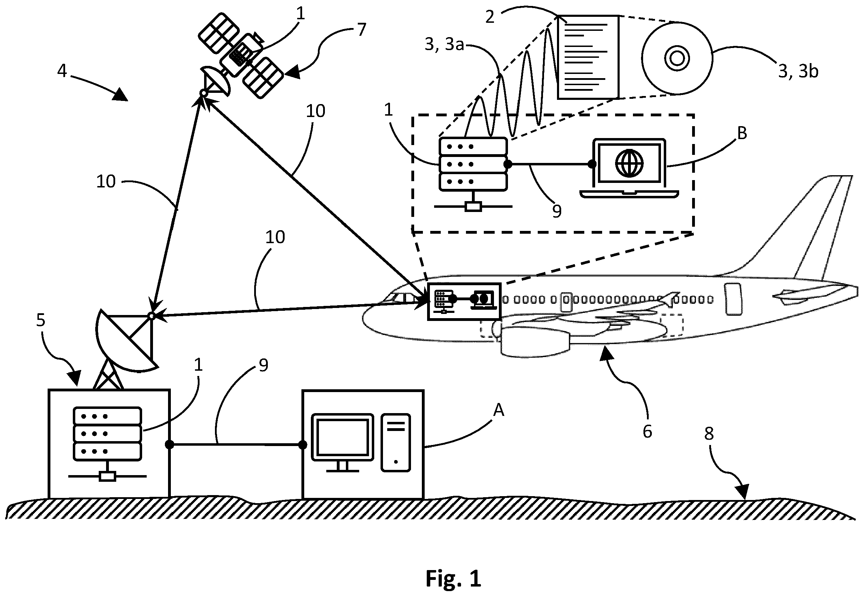

Fig. 1 shows a schematic representation of networking nodes 1, a forwarding decision program 2 and computer readable data carriers 3 as parts of a data transmission system 4. The networking nodes 1 are located at a ground station, in a vehicle 6, in particular an aircraft, and/or in a satellite 7. A sender A may be located at a ground 8 and communicate with the networking node 1 at the ground station 5 via an Internet infrastructure 9, which may involve any suitable wired and wireless communication means, including lines, cables, transceivers, antennas, satellite dishes, and alike. A receiver B is located at the vehicle 6 and communicates with the networking node 1 in the vehicle 6 via the Internet infrastructure 9 as well. Between the networking node 1 at the ground station 5 and the networking node 1 in the vehicle 6, between the networking node 1 at the ground station 5 and the networking unit 1 at the satellite 7, as well as between the networking unit 1 at the satellite 7 and the data exit gateway 2 in the vehicle 6, communicate with each other via an ICN infrastructure 10, which may involve any suitable wired and wireless communication means, including lines, cables, transceivers, antennas, satellite dishes, and alike.

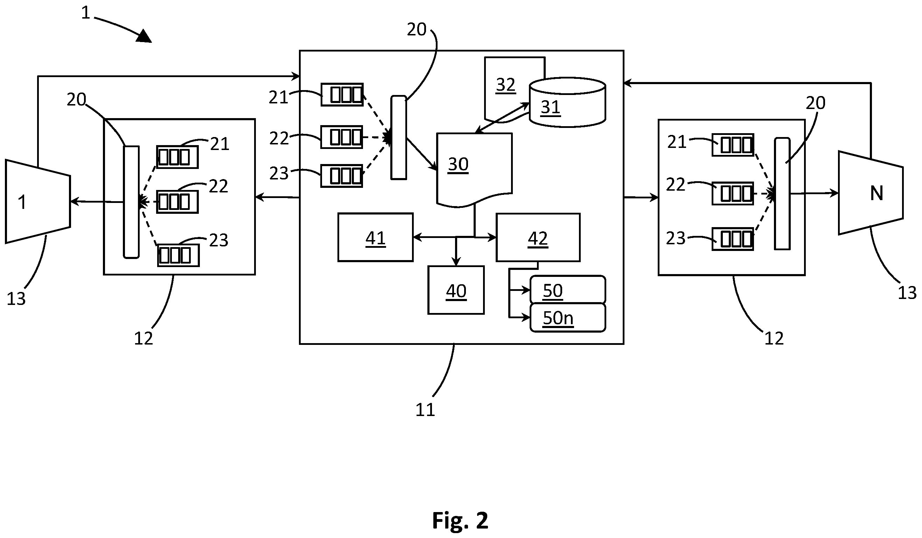

Fig. 2 is schematic representation of the networking node 1. The networking node 1 comprises forwarding engine 11, outbound traffic modules12 and a number of 1 to N (wherein N is a natural number) interface units 13 for connecting to the ICN infrastructure 10. The forwarding engine 11 and outbound traffic modules 12 each comprise a packet receipt schedule 20 as well as request queue 21, a data queue 22, and any number of auxiliary queues which may comprise a Nack queue 23.

The forwarding engine 11 further comprises a forward decision module 30, connected to a local storage unit 31 provided with a caching control unit 32. The forward decision module 30 is configured to administer a timetable 40, a received requests table 41 and a forwarding table 42. The forwarding table 42 can be managed by the forward decision module 30 according to a number of N forwarding strategies 50 to 50n, in particular defining priorities for managing network traffic.

In operation, the networking node 1 receives request packets stores and the name of the requested data object in the received request table 41 (Received Requests) with the indication of the incoming interface unit 13. The interface unit 13 or a certain number of the interface unit 13, in the case requests for that data name are received from other interface units 13, that are the ones that will be used to send the data packets corresponding to the received request packets. If the requested data is stored locally in the local storage 31, then the corresponding data packet is created and transmitted over the interface unit 13, or the interface unit 13 that are associated with the data name in the received requests table 41. If the required data is not found in the local storage unit 31, then the request packet is forwarded via other interface units 31 following the forwarding strategy 50, 50 associated to that name type of the respective request packet and/or of the data requested therein.

The forward decision module 30 manages the rate of received request packets, data packets and Nack packets by means of the packet receipt schedule 20. The latter may be sent by an upstream neighbour (in the direction of a data source) in order to explicitly notify about operational errors. The forwarding decision module 30 is able to react to the current status of the networking node 1, namely the size of the queues 21, 22, 23 in the outbound traffic module 12. If data queues 22 in the outbound traffic module 12 are almost full, i.e., close to a congested state, the forward decision module 30 will give less priority to request packets in order to reduce the probability of dropping the correspondent data packets. In a normal situation (unload system) the forward decision module 30 gives more priority to request packets in order to reduce the end-to-end delay of new requests according to the respective default forwarding strategy 50. In any case the packet receipt schedule 20 of the forwarding engine 11 can also be configured with other forwarding strategies 50, 50n.

The packet receipt schedule 20 of the outbound traffic modules 12 gives different priorities to different queues 21, 22, 23 based on respective local configuration of the outbound traffic module 12. By default, the request queue 21 used for queueing the request packets can be served with more priority in relation to the data queue 22 and Nack queue 23 in order to reduce the end-to-end delay. However, when the data queue 22 is about to reach a congestion warning level, the priority assigned to the request queue 21 is reduced.

The forward decision module 30 controls the local installed forwarding strategies 50, 50n depending on the priority associated with each data type. For instance, requests for data with high priority may take advantage of multi-path forwarding strategies 50, 50n in order to increase the probability of finding the required data in a short period of time. The caching control unit 32 manages local storage unit to store data, in particular high priority data objects having origins (producer of other caching networking nodes 1) that are further away from the current networking node 1, and to data objects that have lower time to live.

The networking nodes can react to the following events:
- Reception of a new packet (Request, Data or Nack) via one of the existing N interface units 13.
- Timeout of the packet receipt schedule 20 implemented inside the forwarding engine 11.
- Reception of a Request packet by the forward decision module 30.
- Reception of a packet on the outbound traffic module 12.

Based on the described events, the operation of the ICN infrastructure 10 by means of the networking nodes 1 can involve the following steps which can be implemented as respective instructions in the forwarding decision program 2:
Reception of a new packet (Request, Data or Nack) via one of the existing N interface units 13:
   - If the packet is a request packet:
      ∘ Add entry in received requests table 41 for the incoming interface unit 13 of the received request packet.
      ∘ The request packet is being stored in the corresponding request queue 21 of the forwarding engine 11.
   - If the packet is a data packet:
      ∘ the data packet is being stored in the corresponding data queue 22 of the forwarding engine 11.
   - If the packet is a Nack packet:
      ∘ Remove the corresponding entry in the received requests table 41 corresponding to the data object mentioned in the Nack packet that is associated with the interface unit 13 with a Nack packet is incoming.
      ∘ The Nack packet is being stored in the corresponding Nack queue 23 of the forwarding engine 11 if the forwarding table 42 has no entries corresponding to the data object mentioned in the Nack packet. Otherwise, drop the Nack packet.
Timeout occurring in the packet receipt schedule 20 implemented inside the forwarding engine 11:
   - Serve the request, data or Nack queues based on the following order:
      ∘ Serve request queue 21 to reduce end-to-end delay, except when data queue 22 of the corresponding data type in the outbound traffic module 12 of the request packet incoming interface unit 13 is close to full.
      ∘ Serve Nack queue 23 to avoid consumers sending more request packets that will use network resources without any usefulness since currently it is not possible to retrieve the corresponding data objects.
      ∘ Serve data queue 22.
   - If the served packet is a Request packet:
      ∘ The local storage unit 31 is checked to see if the corresponding data object is locally stored.
      ∘ If the local storage 31 has the corresponding data object:
         ▪ The Request packet is discarded and a Data packet is created with the same ID of the Request packet.
         ▪ The Data packet is sent to the outbound traffic modules 12 based on the information stored in the received request table 41.
      ∘ If the local storage unit 31 does not have the corresponding data object:
         ▪ A local timer is started in the timetable 40 with the ID of the served request packet.
         ▪ The request packet is passed to the forward decision module 30.
   - If the served packet is a Nack packet:
      ∘ The Nack packet is sent to the outbound interface units 13 stored in the received request table 41 and associated with the data object mentioned in the Nack packet.
   - If the served packet is a Data packet:
      ∘ The local timetable 42 is checked to calculate the end-to-end delay based on the value of the locally stored time, which was set when the correspondent request packet (with the same ID) was sent to the forward decision module 30.
      ∘ The data object ported in the data packet is placed in the local storage unit 31 if it has storage space still available. If the local storage resources of the local storage 31 unit are above a predefined threshold the caching process is activated, giving priority to:
         ▪ Data objects whose data origin (producer of other caching nodes) is further away from the current networking node 1, meaning with higher end-to-end delay.
         ▪ Data objects that have lower time to live.
Reception of a request packet by forwarding decision module 30:
   - When the forward decision module 30 receives a Request packet, it forwards the received packet over a set of interface units 30 according to the most suitable forwarding strategy 50, 50n. For instance, it may use a multicast or broadcast forwarding method to forward high priority data objects in order to increase the probability to deliver them, while low priority data objects only use resources of one interface unit 13.
Reception of a packet on the outbound traffic module 12:
   - When the served packet gets to an outbound traffic module 12 it will be stored in the queue 21, 22, 23 corresponding to its type.
   - The queued packet will be served by the interface unit 13 according to the packet receipt schedule 20 taking into account the available resources in the outbound traffic module 12 giving higher priority to request packets. Data packets are scheduled based on the priority of the associated data objects.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It will be understood that various changes may be made in the function and arrangement of elements described in an exemplary embodiment without departing from the scope of the claims.

Additionally, it is noted that "comprising" or "including" does not exclude any other elements or steps and "a" or "an" does not exclude a multitude or plurality. It is further noted that features or steps which are described with reference to one of the above exemplary embodiments may also be used in combination with other features or steps of other exemplary embodiments described above. Reference signs in the claims are not to be construed as a limitation.

### List of Reference Signs

- 1: networking node
- 2: forwarding decision program
- 3: computer readable data carrier
- 3a: data carrier signal
- 3b: storage medium
- 4: data transmission system
- 5: ground station
- 6: vehicle (aircraft)
- 7: satellite
- 8: ground
- 9: Internet infrastructure
- 10: ICN infrastructure

- 11: forwarding engine
- 12: outbound traffic module
- 13: interface unit

- 20: packet receipt schedule
- 21: request queue
- 22: data queue
- 23: Nack queue

- 30: forward decision module
- 31: local storage unit
- 32: caching control unit

- 40: timetable
- 41: received requests table
- 42: forwarding table

- 50, 50n: forwarding strategy

- A: sender
- B: receiver

## Claims

1. Method for operating a networking node (1) for information centric data networking, the method comprising the step of
queuing a number of request packets and data packets received at the networking node (1) in a request queue (21) and in a data queue (22), respectively;
wherein outbound request packets and data packets are being prioritised over each other by a forward decision module (30) of the networking node (1) based on a length of the request queue (21) and/or the data queue (22).

2. Method according to claim 1, wherein sending out request packets is being prioritised over sending out data packets when the length of the request queue (21) and/or the data queue (22) is below a congestion warning alert level.

3. Method according to claim 1 or 2, wherein sending out data packets is being prioritised over sending out request packets when the length of the data queue (22) is about to reach a congested state.

4. Method according to at least one of claims 1 to 3, further comprising the step of listing incoming request packets in a packet receipt schedule (20) managed at the networking node (1) together with an identifier for an incoming network interface unit (13) of the request packet.

5. Method according to claim 4, further comprising the steps of caching data packets in a local storage unit (31) of the networking node (1);
looking up the packet receipt schedule (20) for finding at least one data packet stored in the local storage unit (31) and corresponding to at least one of the request packets listed in the packet receipt schedule (20); and
sending the at least one data packet to the incoming network interface unit (13) associated with the respective identifier listed in the packet receipt schedule (20) if the corresponding data packet is stored in the local storage unit (31).

6. Method according to claim 5, further comprising the step of sending the at least one request packet listed in the packet receipt schedule (20) to another incoming network interface unit (13) which is not associated with the respective identifier listed in the packet receipt schedule (20) if the corresponding data packet is not stored in the local storage unit (31).

7. Method according to claim 6, further comprising the steps of
listing the sent request packet together with an associated packet identifier in a timetable (40); and
removing the entry regarding at least one of the request packets listed in the timetable (40) after a timeout.

8. Method according to claim 7, further comprising the steps of
checking the timetable (40) for at least one of the request packets sent upon receipt of a corresponding data packet;
calculating an end-to-end delay based on a respective time value set upon queuing the at least one request packet in the request queue (21) in order forwarded to a respective data source of the requested data packet
prioritising a data object from the corresponding data packet to be stored in the networking node (1) if local storage resources of the networking node (1) are above a pre-defined storage threshold, and when a time to retrieve the corresponding data packet from a respective data source exceeds the calculated end-to-end delay, and/or when the corresponding data object has a lower time-to-live than the calculated end-to-end delay.

9. Method according to at least one of claims 1 to 8 above, further comprising the steps of
listing data packets forwarded by the networking node (1) in a forwarding table (42) managed at the networking node (1);
receiving a Nack packet at the networking node; and
removing an entry corresponding to at least one of the data packets from the forwarding table (42).

10. Method according to at least one of claims 1 to 8 above, further comprising the steps of
queuing Nack-packets received at the networking node (1) in a Nack queue (23);
wherein outbound Nack packets, request packets and/or data packets are being prioritised over each other by the forward decision module (30) based on a length of the request queue (21), the data queue (22) and/or the Nack queue (23).

11. Method according to claims 8 and 9, further comprising the step of adding the Nack packet to the Nack queue (23) if the forwarding table (42) does not contain an entry regarding the corresponding data packet.

12. A forwarding decision program (2) for configuring a forwarding decision module (30) of a forwarding engine (11) of a networking node (1) in an information centric data networking infrastructure (9), comprising instructions which, when the program is executed by the networking node (1), cause the networking node (1) to carry out the method of at least one of claims 1 to 11.

13. A computer-readable data carrier (3, 3a, 3b) having stored thereon the forwarding decision program (2) of claim 12.

14. Networking node (1) for information centric data networking, the networking node (1) comprising a computer readable data carrier (3, 3a, 3b) according to claim 13 and/or a forwarding engine (11) configured to carry out the method according to at least one of claims 1 to 11.

15. A vehicle (6), in particular an aircraft, comprising at least one networking node (1) according to claim 14.
